# EUROPEAN PATENT SPECIFICATION

(11) **EP 3 229 015 B1**
(45) Date of publication and mention of the grant of the patent: **30.10.2019**
(21) Application number: 15866124.9
(22) Date of filing: 28.12.2015
(51) Int. Cl.: G01N 25/20, F28D 15/02

(54) **VACUUM THERMAL PERFORMANCE TEST DEVICE FOR TWO-PHASE FLUID LOOP, AND METHOD**
VAKUUMWÄRMELEISTUNGSTESTVORRICHTUNG FÜR ZWEIPHASIGEN FLUIDKREISLAUF UND VERFAHREN
DISPOSITIF DE TEST DE PERFORMANCE THERMIQUE SOUS VIDE POUR UNE BOUCLE DE FLUIDE À DEUX PHASES ET PROCÉDÉ

(30) Priority: 02.12.2014 CN 201410720161; 02.12.2014 CN 201410720854
(43) Date of publication of application: 11.10.2017
(73) Proprietor: Beijing Institute of Spacecraft System Engineering, Beijing 100094 (CN); Miao, Jianyin, Beijing 100094 (CN); Lian, Hongkui, Beijing 100094 (CN); Zhang, Hongxing, Beijing 100094 (CN); Mo, Qing, Beijing 100094 (CN); Wang, Lu, Beijing 100094 (CN); Ding, Ting, Beijing 100094 (CN)
(72) Inventor: MIAO, Jianyin, Beijing 100094 (CN); LIAN, Hongkui, Beijing 100094 (CN); ZHANG, Hongxing, Beijing 100094 (CN); MO, Qing, Beijing 100094 (CN); WANG, Lu, Beijing 100094 (CN); DING, Ting, Beijing 100094 (CN)
(74) Representative: Vidon Brevets & Stratégie
(86) International application number: PCT/CN2015/000834
(87) International publication number: WO 2016/086504

(56) References cited:
- EP-A1- 0 175 995
- CN-A- 103 232 836
- CN-A- 103 482 087
- CN-A- 104 483 147
- CN-A- 104 483 346
- CN-A- 104 502 392
- CN-U- 203 512 059
- CN-U- 203 512 059
- GB-A- 2 498 373
- US-A- 4 917 173
- US-A1- 2007 121 700

## Description

### FIELD OF THE INVENTION

The invention relates to the technical field of spacecraft heat control and particularly relates to a vacuum heat performance testing device and method for a two-phase fluid loop.

### BACKGROUND OF THE INVENTION

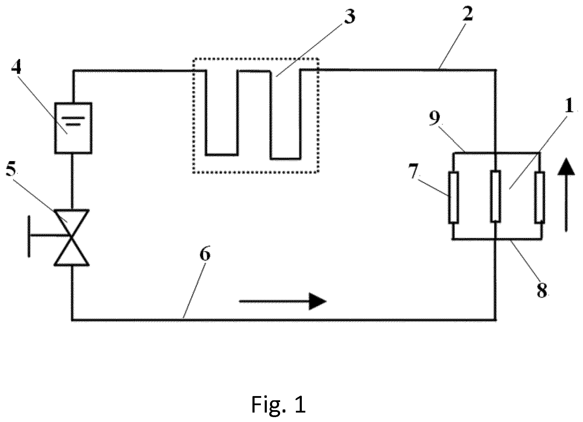

A two-phase fluid loop technology is a spacecraft heat control technology emphatically developed at home and abroad in recent twenty years and mainly comprises a loop heat pipe technology, a mechanical-pump-driven two-phase fluid loop technology, a gravity-driven two-phase fluid loop technology and the like. A gravity-driven two-phase fluid loop system is a key technology for solving the problem that a rover and a lander in a Chang'e lunar exploration project cannot stay over the night on the moon, and heat of an isotopic heat source is brought into a loading cabin by the two-phase fluid loop system, so that the temperature of each equipment in the loading cabin is not too low. As shown in Fig. 1, the gravity-driven two-phase fluid loop system comprises an evaporator 1 (comprising a screen mesh evaporator 7, a liquid flow divider 8 and a steam converger 9), a steam pipeline 2, a condensation pipeline 3, a liquid reservoir 4, a liquid pipeline 6 and a control valve 5, wherein the condensation pipeline 3 is located above the gravity field of the liquid reservoir 4, the evaporator 1 is located below the gravity field of the liquid reservoir 4 and is coupled with the isotopic heat source, and a gravity-aided height difference is formed between the liquid level inside the liquid reservoir 4 and the bottom of the evaporator 1; and the liquid reservoir 4 is connected to an inlet of the evaporator 1 by the liquid pipeline 6 on which the control valve 5 is arranged, and an outlet of the evaporator 1 is connected to the liquid reservoir 4 sequentially by the steam pipeline 2 and the condensation pipeline 3 to form a closed pipeline system. In order to ensure that a gravity-driven two-phase fluid loop has a favorable heat transfer characteristic within the temperature range of -50-70 ° C, ammonia is selected as a working medium. During the night on the moon, the control valve 5 of the gravity-driven two-phase fluid loop is opened to start the gravity-driven two-phase fluid loop and introduce heat of an isotopic nuclear heat source to the inside of a detector. During the daylight on the moon, the control valve 5 of the gravity-driven two-phase fluid loop is closed to stop the gravity-driven two-phase fluid loop and block the isotopic nuclear heat source from transferring the heat to the inside of the detector.

In order to ensure that the gravity-driven two-phase fluid loop technology can normally operate, and also ensure that the gravity-driven two-phase fluid loop can transfer the heat required by the system during the night on the moon and the gravity-driven two-phase fluid loop system can normally block the heat during the daylight on the moon, it is necessary to carry out a vacuum test on the gravity-driven two-phase fluid loop, it is required that the gravity-driven two-phase fluid loop is at a given stable working temperature (namely the temperature of the liquid reservoir 4), and the stable heat transfer quantity and the stable heat transfer temperature difference (the temperature difference of the evaporator 1 and the liquid reservoir 4) of the gravity-driven two-phase fluid loop meet technical indices.

No fixed testing ways and methods are provided because the gravity-driven two-phase fluid loop technology is a novel heat control method for spacecraft heat control. Meanwhile, in consideration of the severe environment on the moon, a testing method for the heat transfer capacity and the blocking performance under the condition that the gravity-driven two-phase fluid loop is combined with the isotopic heat source is not found to be reported in a document and is required to be voluntarily researched, so that the on-orbit application of the gravity-driven two-phase fluid loop is directed.

US 4 917 173 discloses also a vacuum heat performance testing device for a two phase fluid loop.

### SUMMARY OF THE INVENTION

In view of this, the invention provides a vacuum heat performance testing device for a two-phase fluid loop, and by using the device, the heat transfer capacity and blocking performance of the two-phase fluid loop at different working temperatures can be tested and evaluated.

The vacuum heat performance testing device of claim 1 solves the above mentioned technical problem.

The temperature sensors are used for observing the state of the working medium ammonia in the gravity-driven two-phase fluid loop in each part, and the mounting positions of the temperature sensors are as follows:
each of four fins of the evaporator is provided with at least two temperature sensors along the height direction, wherein one of the temperature sensors is located at the lower end of each fin of the evaporator, and the other temperature sensor is located at the upper end of each fin of the evaporator;
each of an inlet, the top and an outlet of the steam pipeline is provided with one temperature sensor;
each of an inlet and an outlet of the condensation pipeline is provided with one temperature sensor, a fin of the condensation pipeline is provided with at least one temperature sensor;
the outer surface of the liquid reservoir is provided with three temperature sensors along the height direction, and the three temperature sensors are respectively located in a gas space, a gas-liquid interface and a liquid space of the liquid reservoir;
the liquid pipeline for connecting the liquid reservoir and the control valve is provided with at least one temperature sensor, and the liquid pipeline for connecting the control valve and the evaporator is provided with at least one temperature sensor;
the control valve is provided with one temperature sensor;
the simulated heat source is provided with at least one temperature sensor;
the edge region of the inner surface of the heat radiation plate is provided with at least one temperature sensor;
wherein the heat insulation plate (12), the heat insulation cushion (13) and the heat insulation columns (14) are made of polyimide or glass fiber reinforced plastic.

A substrate of the heat radiation plate (11) is a P plate or a honeycomb plate, and an OSR sheet is stuck to the surface of the heat radiation plate (11) or a coating with high emissivity is sprayed on the surface of the heat radiation plate (11).

The temperature-controlled heaters are heating fins, heating wires, heating tapes or heating plates.

The invention also provides a vacuum heat performance testing method for a two-phase fluid loop by using the testing device, and by using the method, the heat transfer capacity and blocking performance of the two-phase fluid loop at different working temperatures can be tested and evaluated.

The testing method comprises the following steps:
step 2, placing the loop support in the vacuum cabin, vacuumizing to make the vacuum degree less than 2×10⁻³ Pa, and setting the temperature-controlled heaters on the liquid reservoir, the control valve, the liquid pipeline and the steam pipeline in a self-control state and the self-control threshold to be -55 to -30 ° C; and setting the self-control threshold of the heat radiation plate heater to be -55 to -30 ° C;
step 3, introducing liquid nitrogen to a heat sink of the vacuum cabin to reduce the temperature of the vacuum cabin to -150 ° C; reducing the temperature of the liquid reservoir to a first testing temperature -50 ° C, and realizing the balance of the working condition of the two-phase fluid loop; wherein the balance of the working condition means that the temperature of the liquid reservoir is maintained to be unchanged within half an hour or the monotonic change is less than 1 ° C/h; and the temperature of the liquid reservoir is the working temperature of the two-phase fluid loop;
step 4, testing the ultimate heat transfer capability:
   starting the simulated heat source, increasing the heating power of the simulated heat source according to the set step length, and reducing the heating power of the heat radiation plate heater while increasing the heating power of the simulated heat source every time to maintain the temperature of the liquid reservoir at -50 ° C and realize the balance of the working condition of the two-phase fluid loop until the heating power of the heat radiation plate heater is zero or the balance of the working condition cannot be maintained because the temperature of the evaporator is suddenly raised; and determining the heating power of the simulated heat source at a balance moment when the heating power of the heat radiation plate heater is zero or before the temperature of the evaporator is suddenly raised as the ultimate heat transfer capability of the two-phase fluid loop at the working temperature;
step 5, changing the temperature of the liquid reservoir to each testing temperature by increasing the power of the heat radiation plate while reducing the power of the evaporator, and carrying out the method in the step 4 to obtain the ultimate heat transfer capability of the two-phase fluid loop at each testing temperature, wherein the temperature of the liquid reservoir is changed according to a gradually-raising method;
and step 6, testing the blocking capacity of the two-phase fluid loop:
   when the two-phase fluid loop operates under a balanced working condition at different working temperatures, keeping the heating power of the simulated heat source and the heating power of the heat radiation plate heater unchanged, carrying out opening/closing operation on the control valve, and checking the blocking performance of the two-phase fluid loop: showing that the blocking performance of the two-phase fluid loop is normal if the temperature of the evaporator is suddenly raised after being continuously raised and the temperature of the heat radiation plate is continuously reduced after the control valve is closed, while the temperature of the evaporator is reduced and the temperature of the heat radiation plate is raised after the control valve is reopened until the working condition is balanced; and showing that the blocking performance of the two-phase fluid loop is abnormal if the temperature of the evaporator is unchanged or is stably raised after the control valve is closed;
   wherein the simulated heat source is started in the temperature reducing process in the step 3 so that the two-phase fluid loop operates to accelerate the temperature reduction of the evaporator.

The testing device and method have the beneficial effects that:
(1) the heat transfer and blocking performance of the two-phase fluid loop in a vacuum environment can be comprehensively and effectively evaluated by using the testing device and method provided by the invention;
(2) the substrate of the heat radiation plate selects an aluminum plate or the honeycomb plate, and the OSR sheet is stuck to the surface of the heat radiation plate or the coating with high emissivity is sprayed on the surface of the heat radiation plate so as to be beneficial to the increment of the heat radiation rate of the heat radiation plate;
(3) the layout of the temperature sensors is beneficial to the observation of the state of the working medium ammonia in the two-phase fluid loop and can be used for checking whether each part in the two-phase fluid loop meets a temperature requirement or not and also checking whether the two-phase fluid loop is balanced or not;
and (4) because the temperature reducing rates of the condensation pipeline and the evaporator are different, the temperature rise of the evaporator can be increased by increasing the heating power of the simulated heat source in the temperature reducing process, and the heat of the evaporator can be transferred to the condensation pipeline by the working medium ammonia in the two-phase fluid loop, so that the temperature reducing rate of the evaporator can be increased.

### BRIEF DESCRIPTION OF THE FIGURES

Fig. 1 is a schematic diagram of a gravity-driven two-phase fluid loop system;
Fig. 2 is a schematic diagram of a vacuum heat performance testing device for a two-phase fluid loop;
Fig. 3 is a schematic diagram of an evaporator of the two-phase fluid loop;
Fig. 4 is a schematic diagram of the layout of temperature sensors on the two-phase fluid loop;
Fig. 5 is a schematic diagram of the layout of the temperature sensors on a heat radiation plate (comprising a condensation pipeline);
wherein 1 represents the evaporator, 2 represents a steam pipeline, 3 represents the condensation pipeline, 4 represents a liquid reservoir, 5 represents a control valve, 6 represents a liquid pipeline, 7 represents a screen mesh evaporator, 8 represents a liquid flow divider, 9 represents a steam converger, 10 represents a vacuum cabin, 11 represents the heat radiation plate, 12 represents a heat insulation plate, 13 represents a heat insulation cushion, 14 represents heat insulation columns, 15 represents a simulated heat source, 16 represents an infrared heater, and 17 represents a loop support.

### DETAILED DESCRIPTION

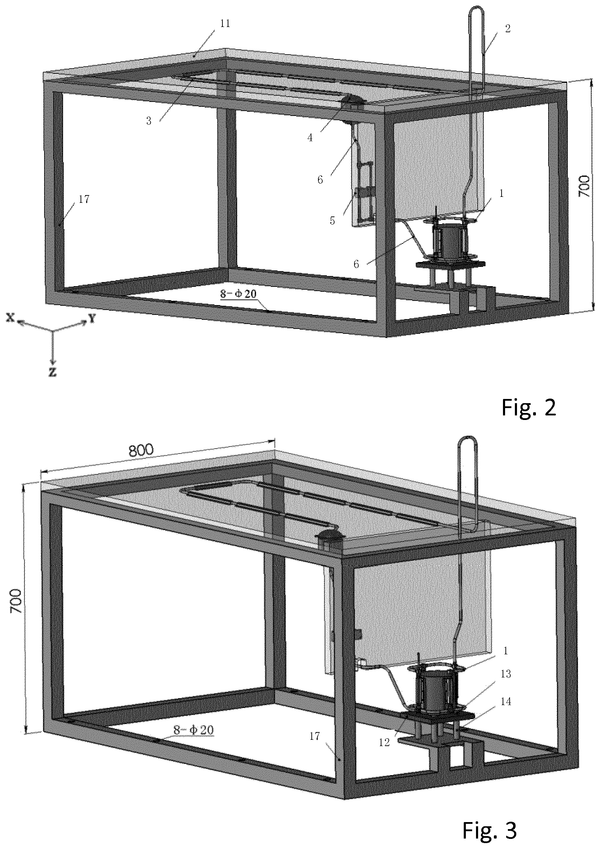

The invention is described in detail below in conjunction with the drawings and examples:
The invention provides a vacuum heat performance testing device for a two-phase fluid loop, and as shown in Fig. 2, the vacuum heat performance testing device comprises a heat radiation plate 11, temperature-controlled heaters, multilayer heat insulation assemblies, temperature sensors, a simulated heat source 15 and a loop support 17,
wherein the two-phase fluid loop and the heat radiation plate 11 are mounted on the loop support 17 in a heat insulation way, the heat radiation plate 11 is mounted at the upper part of the loop support 17 in a way of heat insulation realized by a heat insulation cushion and is used for simulating an on-orbit heat radiation part of the two-phase fluid loop; a condensation pipeline 3 of the two-phase fluid loop is embedded in the heat radiation plate 11, and a liquid reservoir 14 of the two-phase fluid loop is semi-embedded in the heat radiation plate 11 and is located at an outlet of the condensation pipeline 3; an evaporator 1 of the two-phase fluid loop is mounted at the lower part of the loop support 17 in a heat insulation way and is located below the condensation pipeline 3; the temperature-controlled heaters are mounted on a steam pipeline 2, the liquid reservoir 4, a control valve 5 and a liquid pipeline 6 of the two-phase fluid loop and are used for preventing the pipelines from being frozen; the temperature sensors are mounted on the evaporator 1, the steam pipeline 2, the condensation pipeline 3, the liquid reservoir 4, the control valve 5 and the liquid pipeline 6 of the two-phase fluid loop and the heat radiation plate 11 and are used for measuring the temperature of each part of the two-phase fluid loop and the temperature of the heat radiation plate and detecting the operation condition of the two-phase fluid loop; the multilayer heat insulation assemblies are mounted on the steam pipeline 2, the liquid reservoir 4, the control valve 5 and the liquid pipelines 6 and are used for avoiding heat leakage in parts of environments of the pipelines and simulating an on-orbit working condition; the simulated heat source 15 adopts the RHU isotopic electric simulated heat source, is fixedly mounted in the evaporator 1, is used for simulating an isotopic heating device and is also the temperature-controlled heater of the evaporator 1; the loop support 17 is placed in a vacuum cabin 10 by which a vacuum environment of which the temperature is not higher than 80 K and the vacuum degree is less than 2×10⁻³ Pa is provided;
wherein a substrate of the heat radiation plate can be made of a material with a relatively good heat conductivity, such as an aluminum plate or a honeycomb plate, and an OSR sheet is stuck to the outer surface of the heat radiation plate or a coating with high emissivity is sprayed on the outer surface of the heat radiation plate so as to be beneficial to heat radiation.

The heat insulation way of the evaporator 1, the simulated heat source 15 and the loop support 17 is shown as Fig. 3, the evaporator 1 is mounted on a heat insulation plate 12, the simulated heat source 15 is placed inside the evaporator 1, a lug of a tool of the simulated heat source 15 is fixedly arranged on the heat insulation plate 12 by a screw and the heat insulation cushion 13, and the heat insulation plate 12 is fixedly mounted on the loop support 17 by four heat insulation columns 14, wherein the heat insulation plate 12, the heat insulation cushion 13 and the heat insulation columns 14 are made of a material with low heat conductivity, such as polyimide or glass fiber reinforced plastic. The distance from the lower surface of a liquid flow divider 8 to the upper surface of the heat insulation plate 12 is larger than 10 mm, the effective heat insulation distance from the heat insulation plate 12 to the loop support 17 is larger than 100 mm, and the external diameter of the heat insulation cushion 13 is less than 10 mm.

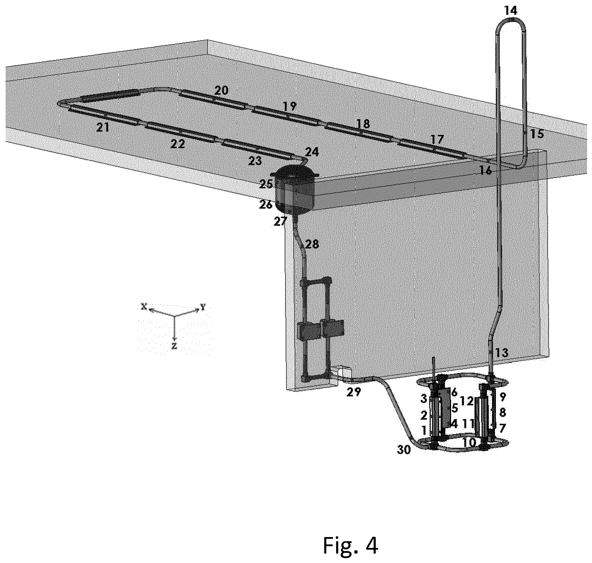

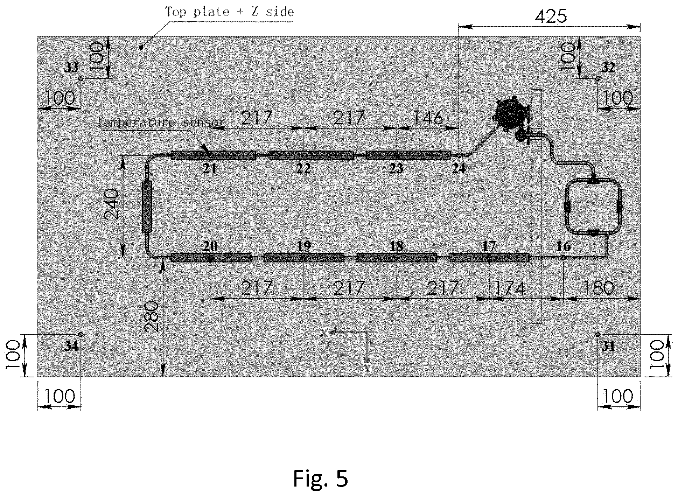

The temperature sensors are thermocouple temperature sensors and are arranged as shown in Fig. 4. The two-phase fluid loop is provided with the 34 temperature sensors:
(1) each of four fins of the evaporator 1 is uniformly provided with three temperature sensors from bottom to top along the height direction, namely the four fins of the evaporator 1 are provided with twelve temperature sensors with serial numbers T1-T12 in total, or only the lower and lower ends of the fins of the evaporator are provided with the sensors, and the temperature sensors are mainly used for measuring the temperatures of a liquid working medium and a gaseous working medium in the evaporator, so that the working state of the evaporator 1 is reflected.
(2) each of an inlet, the top and an outlet of the steam pipeline 2 is provided with one temperature sensor, and the serial numbers of the temperature sensors are respectively T13, T14 and T15.
(3) as shown in Fig. 5, an inlet and an outlet of the condensation pipeline 3 and the condensation pipeline are provided with nine temperature sensors with serial numbers T16-T24; and the condensation pipeline 3 is generally provided with a fin for increasing the heat radiation area, and the temperature sensors are generally mounted on the fin.
(4) the outer surface of the liquid reservoir 4 is provided with three temperature sensors with serial numbers T25-T27 along the height direction, and the three temperature sensors are respectively used for measuring the temperature of a gas, a gas-liquid interface and a liquid in the liquid reservoir 4.
(5) the liquid pipeline 6 is divided into two sections, one section is connected with the liquid reservoir 4 and the control valve 5, and the other section is connected with the control valve 5 and the evaporator 1, wherein the middle point of the liquid pipeline for connecting the liquid reservoir 4 and the control valve 5 is provided with one temperature sensor with a serial number T28; and each of an inlet and an outlet of the liquid pipeline for connecting the control valve 5 and the evaporator 1 is provided with one temperature sensor, and the temperature sensors respectively have the serial numbers of T31 and T32, or the middle point of the liquid pipeline for connecting the control valve 5 and the evaporator 1 is provided with one temperature sensor.
(6) the control valve 5 is provided with the temperature sensors; and if the control valve 5 is composed of two parallel valves (a valve a and a valve b), each of the valve a and the valve b is provided with one temperature sensor, and the temperature sensors have the serial numbers T29 and T30.
(7) the simulated heat source is provided with two temperature sensors with the serial numbers T33 and T34.
and (8) as shown in Fig. 5, the edge region of the inner surface of the heat radiation plate 11 is provided with four temperature sensors with serial numbers T35 and T38, and the four temperature sensors are 100 mm away from the edge of the heat radiation plate.

Positions where the temperature sensors are located serve as measuring point positions.

The temperature-controlled heaters can heat in ways of heating fins, heating wires, heating tapes, heating plates or other ways and adopt a PID control or on/off temperature control way to mainly prevent each part in the two-phase fluid loop from being frozen, wherein the temperature-controlled heater on the liquid reservoir 4 is achieved by mounting two heating fins on the liquid reservoir 4 in a serial connection way; the temperature-controlled heater on the control valve 5 is achieved by mounting the heating tapes on the liquid pipeline connected with the control valve 5, as shown in Fig. 2, each of (a pipeline between a measuring point 28 and a measuring point 29, a pipeline between the measuring point 29 and a measuring point 31, a pipeline between the measuring point 28 and a measuring point 30 and a pipeline between the measuring point 30 and the measuring point 31) is provided with one heating tape, the four heating tapes are connected in series, and each section of pipeline is about 50 mm long; the temperature-controlled heater on the liquid pipeline 6 is achieved by mounting one heating tape between the measuring point 31 and a measuring point 32 on the liquid pipeline 6; and the temperature-controlled heater on the steam pipeline 2 is achieved by three heating tapes which are mounted in a serial connection way.

The temperature-controlled heaters on the liquid reservoir 4, the control valve 5, the liquid pipeline 6 and the steam pipeline 2 mainly play a role in preventing the pipelines from being frozen.

The temperature control of the evaporator 1 is realized by virtue of the simulated heat source 15 mounted inside the evaporator 1. The heat of the isotopic heat source is transferred and taken away by the two-phase fluid loop in a heat transfer process, so that the temperature of the surface of the isotopic heat source can also be reduced to be consistent with the temperature of the evaporator.

The condensation pipeline 2 is pre-embedded into the heat radiation plate 11 so as to have substantially consistent temperature with the heat radiation plate 11, and the temperature control of the heat radiation plate 11 is realized by an infrared heater 16 mounted at the outer side of the heat radiation plate 11 or the heating fins stuck to the heat radiation plate,
wherein the temperature of the heat radiation plate 11 is controlled at -60-50 ° C. Due to the heat transfer action of a working medium ammonia in the operating process of the two-phase fluid loop, the temperatures of the evaporator 1, the steam pipeline 2, the condensation pipeline 3, the liquid reservoir 4, the control valve 5 and the liquid pipeline 6 are basically maintained within the range of -55-50 ° C, wherein the temperature of the liquid reservoir 4 is the working temperature of the two-phase fluid loop.

Whether the simulated heat source 15, the heat radiation plate 11 and the two-phase fluid loop meet a temperature requirement or not is monitored by selecting measuring points T1 (at the lower part of the evaporator 1 and close to the outlet of the liquid pipeline 6), T3 (at the upper part of the evaporator 1 and close to the inlet of the steam pipeline 2), T14 (in the middle of the steam pipeline 2), T17 (at the inlet of the condensation pipeline 3), T23 (at the outlet of the condensation pipeline 3), T25 (at the upper part of the liquid reservoir 4, namely the gas space of the liquid reservoir), T27 (at the lower part of the liquid reservoir), T29-T30 (on a control valve a and a control valve b), T31 (at the inlet of the liquid pipeline 6) and T35-T38 (at the four corners of the heat radiation plate 11) as temperature monitoring points, and meanwhile, whether the balance is achieved or not is judged by comparing the temperatures of temperature monitoring points with the temperatures of other measuring points.

The gravity-driven two-phase fluid loop is subjected to vacuum heat performance testing by using the testing device, so that the ultimate heat transfer capacity and blocking performance of the gravity-driven two-phase fluid loop at different working temperatures are tested, wherein the working temperature of the two-phase fluid loop is the temperature of the liquid reservoir 4, the temperature of the liquid reservoir 4 is changed by changing the temperatures of the evaporator 1 and the heat radiation plate 11 in the testing process, the temperature-controlled heaters on the liquid reservoir 4, the control valve 5, the liquid pipeline 6 and the steam pipeline 2 are only used for preventing each part in the two-phase fluid loop from being frozen, and the specific realization steps are as follows:
step 1, placing the loop support 17 in the vacuum cabin 10, vacuumizing (the vacuum degree is less than 2×10⁻³ Pa), and setting the temperature-controlled heaters on the liquid reservoir 4, the control valve 5, the liquid pipeline 6 and the steam pipeline 2 in a self-control state and the self-control threshold to be -55 to -30 ° C, namely automatically starting the temperature-controlled heaters when the temperature is less than the self-control threshold to prevent the pipelines from being frozen; and setting the self-control threshold of a heat radiation plate heater to be -55 to -30 ° C;
step 2, introducing liquid nitrogen to a heat sink of the vacuum cabin, reducing the temperature of the vacuum cabin to -150 ° C, wherein the steam pipeline (2), the liquid reservoir (4), the control valve (5) and the liquid pipeline (6) of the two-phase fluid loop are wrapped by the multilayer heat insulation assemblies, so that the temperature reducing rate of the two-phase fluid loop is low, and the temperature reducing rate of the heat radiation plate is highest, in order to increase the temperature reducing rate of each part in the two-phase fluid loop, starting the simulated heat source 15 in the temperature reducing process to make the two-phase fluid loop operate, driving the evaporator and the liquid reservoir to reduce the temperatures by the condensation pipeline in the heat radiation plate, accelerating the temperature reduction of the evaporator until the temperature of the liquid reservoir is reduced to -50 ° C, and when the temperature of the liquid reservoir is maintained to be unchanged within half an hour or the monotonic change is less than 1 ° C/h, considering that the working condition is balanced, wherein the temperature of the liquid reservoir is the working temperature of the two-phase fluid loop;
step 3, testing the ultimate heat transfer capability: increasing the heating power of the evaporator (namely the heating power of the simulated heat source) according to a certain step length, and synchronously reducing the heating power of the heat radiation plate heater while increasing the heating power of the simulated heat source every time to maintain the temperature of the liquid reservoir at -50 ° C, waiting for the balance of the working condition of the two-phase fluid loop after regulating the heating power every time until the heating power of the heat radiation plate heater is zero or the balance of the working condition cannot be maintained because the temperature of the evaporator is suddenly raised; wherein when the heating power of the heat radiation plate is zero, the heat radiation plate achieves the maximum heat radiation capacity at the working temperature, the further increment of the heating power of the evaporator can result in the temperature rise of the liquid reservoir, and the temperature of the liquid reservoir cannot be further maintained at -50 ° C, when the heating power of the evaporator is higher than the ultimate heat transfer capability of the two-phase fluid loop, a liquid in the evaporator is dry to result in the sudden rise of the temperature of the evaporator, and therefore, determining the heating power of the evaporator at a balance moment when the heating power of the heat radiation plate heater is zero or before the temperature of the evaporator is suddenly raised as the ultimate heat transfer capability of the two-phase fluid loop at the working temperature;
step 4, changing the temperature of the liquid reservoir by increasing the power of the heat radiation plate while reducing the power of the evaporator, and carrying out the method in the step 3 to obtain the ultimate heat transfer capabilities of the two-phase fluid loop at different working temperatures, wherein when the ultimate heat transfer capability of the two-phase fluid loop at different working temperatures is tested, the working temperatures are regulated by using a gradually-raising method, for example, the ultimate heat transfer capability when the working temperature is -50 ° C is firstly tested, and then, the ultimate heat transfer capabilities when the working temperatures are -40 ° C, -30 ° C, -20 ° C and the like are sequentially tested.
and step 5, testing the blocking capacity of the two-phase fluid loop:
   when the two-phase fluid loop operates under a balanced working condition at different working temperatures, keeping the heating power of the evaporator and the heating power of the heat radiation plate heater unchanged, carrying out opening/closing operation on the valve of the gravity-driven two-phase fluid loop, and checking the blocking performance of the two-phase fluid loop: showing that the blocking performance of the two-phase fluid loop is normal if the temperature of the evaporator is continuously raised and is suddenly raised and the temperature of the heat radiation plate is continuously reduced after the control valve is closed, while the temperature of the evaporator is reduced and the temperature of the heat radiation plate is raised after the control valve is reopened until the working condition is balanced; and showing that the blocking performance of the two-phase fluid loop is abnormal if the temperature of the evaporator is unchanged or is slowly raised after the control valve is closed.

In summary, merely preferred embodiments of the invention have been described above and are not intended to limit the scope of the invention.

## Claims

1. A vacuum heat performance testing device for a two-phase fluid loop comprising a heat radiation plate (11), temperature-controlled heaters, multilayer heat insulation assemblies, temperature sensors, a simulated heat source (15) and a loop support (17), wherein the heat radiation plate (11) is mounted at the upper part of the loop support (17) in a way of heat insulation realized by a heat insulation cushion; a condensation pipeline (3) of the two-phase fluid loop is embedded in the heat radiation plate (11), and a liquid reservoir (4) of the two-phase fluid loop is semi-embedded in the heat radiation plate (11); an evaporator (1) of the two-phase fluid loop is mounted at the lower part of the loop support (17) in a heat insulation way; the temperature-controlled heaters are mounted on a steam pipeline (2), the liquid reservoir (4), a control valve (5) and a liquid pipeline (6) of the two-phase fluid loop; the temperature sensors are mounted on edge regions of the evaporator (1), the steam pipeline (2), the condensation pipeline (3), the liquid reservoir (4), the control valve (5), the liquid pipeline (6), the simulated heat source (15) and the heat radiation plate (11); the steam pipeline (2), the liquid reservoir (4), the control valve (5) and the liquid pipeline (6) are wrapped by the multilayer heat insulation assemblies; the simulated heat source (15) is an RHU isotopic electric simulated heat source and is fixedly mounted in the evaporator (1); a heat radiation plate heater for providing a working temperature for the heat radiation plate (11) is mounted, and the heat radiation plate heater is an infrared heater (16) mounted in a space at the outer side of the heat radiation plate or heating fins stuck to the heat radiation plate; the loop support (17) is placed in a vacuum cabin (10);
wherein the evaporator (1) is mounted on a heat insulation plate (12), the simulated heat source (15) is placed inside the evaporator (1), a lug of a tool of the simulated heat source (15) is fixedly arranged on the heat insulation plate (12) by a screw and a heat insulation cushion (13), and the heat insulation plate (12) is fixedly mounted on the loop support (17) by four heat insulation columns (14);
the simulated heat source (15) is used for controlling the temperature of the evaporator and maintaining the temperature of the evaporator (1) at -55-50 ° C; the heat radiation plate heater is used for controlling the temperature of the heat radiation plate (11) and maintaining the temperature of the heat radiation plate (11) at -60-50 ° C; and the temperature-controlled heaters are used for preventing the steam pipeline (2), the liquid reservoir (4), the control valve (5) and the liquid pipeline (6) from being frozen, and self-control thresholds of the temperature-controlled heaters are set to be -55 to -30 ° C.

2. The vacuum heat performance testing device for the two-phase fluid loop of claim 1, **characterized in that** the mounting positions of the temperature sensors are as follows:
each of four fins of the evaporator (1) is provided with at least two temperature sensors along the height direction, wherein one of the temperature sensors is located at the lower end of each fin of the evaporator, and the other temperature sensor is located at the upper end of each fin of the evaporator;
each of an inlet, a top and an outlet of the steam pipeline (2) is provided with one temperature sensor;
each of an inlet and an outlet of the condensation pipeline (3) is provided with one temperature sensor, a fin of the condensation pipeline (3) is provided with at least one temperature sensor;
an outer surface of the liquid reservoir (4) is provided with three temperature sensors along the height direction, and the three temperature sensors are respectively located in a gas space, a gas-liquid interface and a liquid space of the liquid reservoir (4);
the liquid pipeline for connecting the liquid reservoir (4) and the control valve (5) is provided with at least one temperature sensor, and the liquid pipeline for connecting the control valve (5) and the evaporator (1) is provided with at least one temperature sensor;
the control valve (5) is provided with one temperature sensor;
the simulated heat source (15) is provided with at least one temperature sensor;
and the edge region of an inner surface of the heat radiation plate (11) is provided with at least one temperature sensor.

3. The vacuum heat performance testing device for the two-phase fluid loop of claim 1, **characterized in that** the heat insulation plate (12), the heat insulation cushion (13) and the heat insulation columns (14) are made of polyimide or glass fiber reinforced plastic.

4. The vacuum heat performance testing device for the two-phase fluid loop of claim 1, **characterized in that** a substrate of the heat radiation plate (11) is an aluminum plate or a honeycomb plate, and an OSR sheet is stuck to a surface of the heat radiation plate (11) or a coating with high emissivity is sprayed on the surface of the heat radiation plate (11).

5. The vacuum heat performance testing device for the two-phase fluid loop of claim 1, **characterized in that** the temperature-controlled heaters are heating fins, heating wires, heating tapes or heating plates.

6. A vacuum heat performance testing method for a two-phase fluid loop by using the testing device of any one of claims 1-5, **characterized by** comprising the following steps:
step 1, placing the loop support (17) in the vacuum cabin (10), vacuumizing to make the vacuum degree less than 2×10-3 Pa, and setting the temperature-controlled heaters on the liquid reservoir (4), the control valve (5), the liquid pipeline (6) and the steam pipeline (2) in a self-control state and the self-control threshold to be -55 to -30 ° C; and setting the self-control threshold of a heat radiation plate heater to be -55 to -30 ° C;
step 2, introducing liquid nitrogen to a heat sink of the vacuum cabin (10) to reduce the temperature of the vacuum cabin to -150 ° C; reducing the temperature of the liquid reservoir to a first testing temperature -50 ° C, and realizing the balance of the working condition of the two-phase fluid loop; wherein the balance of the working condition means that the temperature of the liquid reservoir is maintained to be unchanged within half an hour or the monotonic change is less than 1 ° C/h; and the temperature of the liquid reservoir is the working temperature of the two-phase fluid loop;
step 3, testing the ultimate heat transfer capability:
starting the simulated heat source, increasing the heating power of the simulated heat source according to the set step length, and reducing the heating power of the heat radiation plate heater while increasing the heating power of the simulated heat source every time to maintain the temperature of the liquid reservoir at -50 ° C and realize the balance of the working condition of the two-phase fluid loop until the heating power of the heat radiation plate heater is zero or the balance of the working condition cannot be maintained because the temperature of the evaporator is suddenly raised; and therefore, determining the heating power of the simulated heat source at a balance moment when the heating power of the heat radiation plate heater is zero or before the temperature of the evaporator is suddenly raised as the ultimate heat transfer capability of the two-phase fluid loop at the working temperature;
step 4, changing the temperature of the liquid reservoir to each testing temperature by increasing the power of the heat radiation plate while reducing the power of the evaporator, and carrying out the method in the step 3 to obtain the ultimate heat transfer capability of the two-phase fluid loop at each testing temperature, wherein the temperature of the liquid reservoir is changed by using a gradually-raising method;
and step 5, testing the blocking capacity of the two-phase fluid loop:
when the two-phase fluid loop operates under a balanced working condition at different working temperatures, keeping the heating power of the simulated heat source and the heating power of the heat radiation plate heater unchanged, carrying out opening/closing operation on the control valve, and checking the blocking performance of the two-phase fluid loop: showing that the blocking performance of the two-phase fluid loop is normal if the temperature of the evaporator is suddenly raised after being continuously raised and the temperature of the heat radiation plate is continuously reduced after the control valve is closed, while the temperature of the evaporator is reduced and the temperature of the heat radiation plate is raised after the control valve is reopened until the working condition is balanced; and showing that the blocking performance of the two-phase fluid loop is abnormal if the temperature of the evaporator is unchanged or is stably raised after the control valve is closed.

7. The vacuum heat performance testing method for the two-phase fluid loop of claim 6, **characterized in that** the simulated heat source (15) is started in the temperature reducing process in the step 2 so that the two-phase fluid loop operates to accelerate the temperature reduction of the evaporator (1).

## Patentansprüche

1. Vakuum-Wärmeleistungs-Testvorrichtung für eine Zweiphasenfluidschleife, umfassend eine Wärmestrahlungsplatte (11), temperaturgesteuerte Heizer, mehrschichtige Wärmedämmungsanordnungen, Temperatursensoren, eine simulierte Wärmequelle (15) und einen Schleifenträger (17), wobei die Wärmestrahlungsplatte (11) auf dem oberen Teil des Schleifenträgers (17) wärmeisolierend, realisiert durch ein Wärmeisolierungskissen, angebracht ist; eine Kondensationsleitung (3) der Zweiphasenfluidschleife in die Wärmestrahlungsplatte (11) eingebettet ist und ein Flüssigkeitsreservoir (4) der Zweiphasenfluidschleife halb in die Wärmestrahlungsplatte (11) eingebettet ist; ein Verdampfer (1) der Zweiphasenfluidschleife an dem unteren Teil des Schleifenträgers (17) in wärmeisolierender Weise angebracht ist; die temperaturgesteuerten Heizer auf einer Dampfleitung (2), dem Flüssigkeitsreservoir (4), einem Steuerventil (5) und einer Flüssigkeitsleitung (6) der Zweiphasenfluidschleife angebracht sind; die Temperatursensoren in Kantenbereichen des Verdampfers (1), der Dampfleitung (2), der Kondensationsleitung (3), dem Flüssigkeitsreservoir (4), dem Steuerventil (5), der Flüssigkeitsleitung (6), der simulierten Wärmequelle (15) und der Wärmestrahlungsplatte (11) angeordnet sind und die Dampfleitung (2), das Flüssigkeitsreservoir (4), das Steuerventil (5) und die Flüssigkeitsleitung (6) durch die mehrschichtigen Wärmedämmungsanordnungen umschlossen sind; die simulierte Wärmequelle (15) eine RHU-isotopische elektrische simulierte Wärmequelle ist und fest am Verdampfer (1) angebracht ist; ein Wärmestrahlungsplattenheizer zum Bereitstellen einer Betriebstemperatur für die Wärmestrahlungsplatte (11) angebracht ist und der Wärmestrahlungsplattenheizer ein Infrarotstrahler (16) ist, der in einem Raum auf der Außenseite der Wärmestrahlungsplatte oder Heizrippen, die an der Wärmestrahlungsplatte haften, angebracht ist; der Schleifenträger (17) in einer Vakuumkabine (10) angeordnet ist;
wobei der Verdampfer (1) auf einer Wärmeisolierungsplatte (12) angebracht ist, die simulierte Wärmequelle (15) in dem Verdampfer (1) angeordnet ist, eine Lasche eines Werkzeugs der simulierten Wärmequelle (15) fest auf der Wärmeisolierungsplatte (12) durch eine Schraube und ein Wärmeisolierungskissen (13) angeordnet ist und die Wärmeisolierungsplatte (12) fest auf dem Schleifenträger (17) durch vier Wärmeisolierungsspalten (14) angebracht ist;
die simulierte Wärmequelle (15) zum Steuern der Temperatur des Verdampfers und zum Aufrechterhalten der Temperatur des Verdampfers (1) bei -55-50 °C verwendet wird; die Wärmestrahlungsplatte zum Steuern der Temperatur der Wärmestrahlungsplatte (11) verwendet wird und die Temperatur der Wärmestrahlungsplatte (11) auf -60-50 °C hält; und die temperaturgesteuerten Heizer verwendet werden, um die Dampfleitung (2), das Flüssigkeitsreservoir (4), das Steuerventil (5) und die Flüssigkeitsleitung (6) vor einem Einfrieren zu schützen und Selbstkontrollschwellenwerte des temperaturgesteuerten Heizers auf -55 bis -30 °C eingestellt sind.

2. Vakuum-Wärmeleistungs-Testvorrichtung für eine Zweiphasenfluidschleife nach Anspruch 1, **dadurch gekennzeichnet, dass** die Anbringungspositionen der Temperatursensoren wie folgt sind:
jede der vier Rippen des Verdampfers (1) ist mit mindestens zwei Temperatursensoren entlang der Höhenrichtung bereitgestellt, wobei einer der Temperatursensoren am unteren Ende jeder Rippe des Verdampfers angeordnet ist und der andere Temperatursensor am oberen Ende jeder Rippe des Verdampfers angeordnet ist;
jedes von einem Einlass, einem Oberteil und einem Auslass der Dampfleitung (2) ist mit einem Temperatursensor bereitgestellt;
jeder von einem Einlass und einem Auslass der Kondensationsleitung (3) ist mit einem Temperatursensor bereitgestellt, wobei eine Rippe der Kondensationsleitung (3) mit mindestens einem Temperatursensor bereitgestellt ist;
eine äußere Oberfläche des Flüssigkeitsreservoirs (4) ist mit drei Temperatursensoren entlang der Höhenrichtung bereitgestellt und die drei Temperatursensoren sind entsprechend in einem Gasraum, einer Gas-Flüssigkeits-Schnittstelle und einem Flüssigkeitsraum des Flüssigkeitsreservoirs (4) angeordnet;
die Flüssigkeitsleitung zum Verbinden des Flüssigkeitsreservoirs (4) und des Steuerventils (5) ist mit mindestens einem Temperatursensor bereitgestellt und die Flüssigkeitsleitung zum Verbinden des Steuerventils (5) mit dem Verdampfer (1) ist mit mindestens einem Temperatursensor bereitgestellt;
das Steuerventil (5) ist mit einem Temperatursensor bereitgestellt;
die simulierte Wärmequelle (15) ist mit mindestens einem Temperatursensor bereitgestellt;
ein Kantenbereich einer inneren Oberfläche der Wärmestrahlungsplatte (11) ist mit mindestens einem Temperatursensor bereitgestellt.

3. Vakuum-Wärmeleistungs-Testvorrichtung für die Zweiphasenfluidschleife nach Anspruch 1, **dadurch gekennzeichnet, dass** die Wärmeisolierungsplatte (12), das Wärmeisolierungskissen (13) und die Wärmeisolierungsspalten (14) aus Polyamid oder glasfaserverstärktem Kunststoff hergestellt sind.

4. Vakuum-Wärmeleistungs-Testvorrichtung für die Zweiphasenfluidschleife nach Anspruch 1, **dadurch gekennzeichnet, dass** ein Träger der Wärmestrahlungsplatte (11) eine Aluminiumplatte oder eine Wabenplatte ist und eine OSR-Platte auf einer Oberfläche der Wärmestrahlungsplatte (11) angehaftet ist oder eine Beschichtung mit hohem Emissionsgrad auf die Oberfläche der Wärmestrahlungsplatte (11) aufgesprüht ist.

5. Vakuum-Wärmeleistungs-Testvorrichtung für die Zweiphasenfluidschleife nach Anspruch 1, **dadurch gekennzeichnet, dass** die temperaturgesteuerten Heizer Heizrippen, Heizdrähte, Heizbänder oder Heizplatten sind.

6. Vakuum-Wärmeleistungs-Testverfahren für eine Zweiphasenfluidschleife durch Verwendung einer Testvorrichtung nach einem der Ansprüche 1 bis 5, **dadurch gekennzeichnet, dass** es die folgenden Schritte umfasst:
Schritt 1, Platzieren des Schleifenträgers (17) in der Vakuumkabine (10), Vakuumieren zum Herstellen des Vakuumgrads geringer als 2x10-3 Pa und Stellen der temperaturgesteuerten Heizer auf dem Flüssigkeitsreservoir (4), dem Steuerventil (5), der Flüssigkeitsleitung (6) und der Dampfleitung (2) in einen selbststeuernden Zustand und den Selbststeuerschwellenwert zwischen -55 bis -30 °C und Einstellen des Selbststeuerschwellenwerts eines Wärmestrahlungsplattenheizers auf -55 bis -30 °C;
Schritt 2, Einführen von flüssigem Stickstoff in eine Wärmesenke der Vakuumkabine (10) zum Reduzieren der Temperatur der Vakuumkabine auf -150 °C; Reduzieren der Temperatur des Flüssigkeitsreservoirs auf eine erste Testtemperatur -50 °C und Realisieren des Ausgleichs einer Arbeitsbedingung der Zweiphasenfluidschleife; wobei der Ausgleich der Arbeitsbedingung bedeutet, dass die Temperatur des Flüssigkeitsreservoirs für eine halbe Stunde unverändert aufrechterhalten wird oder die monotone Änderung geringer als 1 °C/h ist; und die Temperatur des Flüssigkeitsreservoirs die Betriebstemperatur der Zweiphasenfluidschleife ist;
Schritt 3, Testen der ultimativen Wärmeübertragungsleistung:
Starten der simulierten Wärmequelle, Erhöhen der Wärmeleistung der simulierten Wärmequelle gemäß der eingestellten Schrittweite und Reduzieren der Wärmeleistung des Wärmestrahlungsplattenheizers, während des Erhöhens der Wärmeleistung der simulierten Wärmequelle, um jederzeit die Temperatur des Flüssigkeitsreservoirs bei -50 °C aufrechtzuerhalten, und Realisieren des Ausgleichs der Arbeitsbedingung der Zweiphasenfluidschleife bis die Wärmeleistung des Wärmestrahlungsplattenheizers Null ist oder der Ausgleich der Arbeitsbedingung nicht aufrechterhalten werden kann, weil die Temperatur des Verdampfers plötzlich ansteigt; und daher Bestimmen der Wärmeleistung der simulierten Wärmequelle in einem Ausgleichsmoment, wenn die Wärmeleistung des Wärmestrahlungsplattenheizers Null ist oder bevor die Temperatur des Verdampfers plötzlich ansteigt als die ultimative Wärmeübertragungsfähigkeit der Zweiphasenfluidschleife bei der Arbeitstemperatur;
Schritt 4, Ändern der Temperatur des Flüssigkeitsreservoirs auf jede Testtemperatur durch Erhöhen der Leistung der Wärmestrahlungsplatte während des Reduzierens der Leistung des Verdampfers und Ausführen des Verfahrens in dem Schritt 3, um die ultimative Wärmetransferfähigkeit der Zweiphasenfluidschleife bei jeder Testtemperatur zu erhalten, wobei die Temperatur des Flüssigkeitsreservoirs durch Verwendung eines schrittweise anhebenden Verfahrens geändert wird;
und Schritt 5, Prüfen der Blockierfähigkeit der Zweiphasenfluidschleife:
wenn die Zweiphasenfluidschleife unter ausgeglichenen Arbeitsbedingungen bei unterschiedlichen Betriebstemperaturen arbeitet, Unveränderthalten der Wärmeleistung der simulierten Wärmequelle und der Wärmeleistung des Wärmestrahlungsplattenheizers, Ausführen von Öffnungs-/Schließoperationen mit dem Steuerventil und Prüfen der Blockierleistung der Zweiphasenfluidschleife: Zeigen, dass die Blockierleistung der Zweiphasenfluidschleife normal ist, wenn die Temperatur des Verdampfers plötzlich ansteigt, nachdem sie kontinuierlich angestiegen ist und die Temperatur der Wärmestrahlungsplatte kontinuierlich reduziert wird, nachdem das Steuerventil geschlossen wird, während die Temperatur des Verdampfers reduziert wird und die Temperatur der Wärmestrahlungsplatte erhöht wird, nachdem das Steuerventil wieder geöffnet wird, bis die Arbeitsbedingungen ausgeglichen sind; und Zeigen, dass die Blockierleistung der Zweiphasenfluidschleife unnormal ist, wenn die Temperatur des Verdampfers unverändert ist oder stabil angehoben wird, nachdem das Steuerventil geschlossen wird.

7. Vakuum-Wärmeleistungs-Testverfahren für die Zweiphasenfluidschleife nach Anspruch 6, **dadurch gekennzeichnet, dass** die simulierte Wärmequelle (15) im Temperaturreduzierungsprozess in dem Schritt 2 so gestartet wird, dass die Zweiphasenfluidschleife betrieben wird, um die Temperaturabsenkung des Verdampfers (1) zu beschleunigen.

## Revendications

1. Dispositif d'essai de performance thermique sous vide pour une boucle de fluide diphasique comprenant une plaque de rayonnement de chaleur (11), des éléments chauffants à température régulée, des ensembles d'isolation thermique multicouche, des capteurs de température, une source de chaleur simulée (15) et un support de boucle (17), dans lequel la plaque de rayonnement de chaleur (11) est montée au niveau de la partie supérieure du support de boucle (17) en isolation thermique réalisée par un coussin d'isolation thermique ; une canalisation de condensation (3) de la boucle de fluide diphasique est incorporée dans la plaque de rayonnement de chaleur (11), et un réservoir de liquide (4) de la boucle de fluide diphasique est semi-incorporé dans la plaque de rayonnement de chaleur (11) ; un évaporateur (1) de la boucle de fluide diphasique est monté au niveau de la partie inférieure du support de boucle (17) en isolation thermique ; les éléments chauffants à température régulée sont montés sur une canalisation de vapeur (2), le réservoir de liquide (4), une vanne de régulation (5) et une canalisation de liquide (6) de la boucle de fluide diphasique ; les capteurs de température sont montés sur des régions de bord de l'évaporateur (1), de la canalisation de vapeur (2), de la canalisation de condensation (3), du réservoir de liquide (4), de la vanne de régulation (5), de la canalisation de liquide (6), de la source de chaleur simulée (15) et de la plaque de rayonnement de chaleur (11) ; la canalisation de vapeur (2), le réservoir de liquide (4), la vanne de régulation (5) et la canalisation de liquide (6) sont enveloppés par les ensembles d'isolation thermique multicouche ; la source de chaleur simulée (15) est une source de chaleur simulée électrique isotopique RHU et est montée fixe dans l'évaporateur (1) ; un élément chauffant à plaque de rayonnement de chaleur pour fournir une température de fonctionnement pour la plaque de rayonnement de chaleur (11) est monté, et l'élément chauffant à plaque de rayonnement de chaleur est un élément chauffant à infrarouge (16) monté dans un espace du côté extérieur de la plaque de rayonnement de chaleur ou des ailettes chauffantes collées à la plaque de rayonnement de chaleur ; le support de boucle (17) est placé dans une cabine sous vide (10) ;
dans lequel l'évaporateur (1) est monté sur une plaque d'isolation thermique (12), la source de chaleur simulée (15) est placée à l'intérieur de l'évaporateur (1), un ergot d'un outil de la source de chaleur simulée (15) est agencé fixe sur la plaque d'isolation thermique (12) par une vis et un coussin d'isolation thermique (13), et la plaque d'isolation thermique (12) est montée fixe sur le support de boucle (17) par quatre colonnes d'isolation thermique (14) ;
la source de chaleur simulée (15) est utilisée pour réguler la température de l'évaporateur et maintenir la température de l'évaporateur (1) à -55-50 °C ; l'élément chauffant à plaque de rayonnement de chaleur est utilisé pour réguler la température de la plaque de rayonnement de chaleur (11) et maintenir la température de la plaque de rayonnement de chaleur (11) à -60-50 °C ; et les éléments chauffants à température régulée sont utilisés pour empêcher le gel de la canalisation de vapeur (2), du réservoir de liquide (4), de la vanne de régulation (5) et de la canalisation de liquide (6), et des seuils d'autorégulation des éléments chauffants à température régulée sont réglés pour être entre -55 et -30 °C.

2. Dispositif d'essai de performance thermique sous vide pour la boucle de fluide diphasique selon la revendication 1, **caractérisé en ce que** les positions de montage des capteurs de température sont comme suit :
chacune de quatre ailettes de l'évaporateur (1) est pourvue d'au moins deux capteurs de température suivant la direction de hauteur, dans lequel l'un des capteurs de température est situé au niveau de l'extrémité inférieure de chaque ailette de l'évaporateur, et l'autre capteur de température est situé au niveau de l'extrémité supérieure de chaque ailette de l'évaporateur ;
chacun d'un orifice d'entrée, d'un dessus et d'un orifice de sortie de la canalisation de vapeur (2) est pourvu d'un capteur de température ;
chacun d'un orifice d'entrée et d'un orifice de sortie de la canalisation de condensation (3) est pourvu d'un capteur de température, une ailette de la canalisation de condensation (3) est pourvue d'au moins un capteur de température ;
une surface extérieure du réservoir de liquide (4) est pourvue de trois capteurs de température suivant la direction de hauteur, et les trois capteurs de température sont situés respectivement dans un espace de gaz, une interface gaz-liquide et un espace de liquide du réservoir de liquide (4) ;
la canalisation de liquide pour raccorder le réservoir de liquide (4) et la vanne de régulation (5) est pourvue d'au moins un capteur de température, et la canalisation de liquide pour raccorder la vanne de régulation (5) et l'évaporateur (1) est pourvue d'au moins un capteur de température ;
la vanne de régulation (5) est pourvue d'un capteur de température ;
la source de chaleur simulée (15) est pourvue d'au moins un capteur de température ;
et la région de bord d'une surface intérieure de la plaque de rayonnement de chaleur (11) est pourvue d'au moins un capteur de température.

3. Dispositif d'essai de performance thermique sous vide pour la boucle de fluide diphasique selon la revendication 1, **caractérisé en ce que** la plaque d'isolation thermique (12), le coussin d'isolation thermique (13) et les colonnes d'isolation thermique (14) sont réalisés en polyimide ou en plastique renforcé de fibre de verre.

4. Dispositif d'essai de performance thermique sous vide pour la boucle de fluide diphasique selon la revendication 1, **caractérisé en ce qu'**un substrat de la plaque de rayonnement de chaleur (11) est une plaque en aluminium ou une plaque en nid d'abeilles, et une feuille OSR est collée à une surface de la plaque de rayonnement de chaleur (11) ou un revêtement de haute émissivité est pulvérisé sur la surface de la plaque de rayonnement de chaleur (11).

5. Dispositif d'essai de performance thermique sous vide pour la boucle de fluide diphasique selon la revendication 1, **caractérisé en ce que** les éléments chauffants à température régulée sont des ailettes chauffantes, des fils chauffants, des rubans chauffants ou des plaques chauffantes.

6. Procédé d'essai de performance thermique sous vide pour une boucle de fluide diphasique en utilisant le dispositif d'essai de l'une quelconque des revendications 1 à 5, **caractérisé en ce qu'**il comprend les étapes suivantes :
étape 1, la mise en place du support de boucle (17) dans la cabine sous vide (10), le fait de faire le vide pour rendre le degré de vide inférieur à 2 x 10-3 Pa, et le réglage des éléments chauffants à température régulée sur le réservoir de liquide (4), la vanne de régulation (5), la canalisation de liquide (6) et la canalisation de vapeur (2) dans un état d'autorégulation et du seuil d'autorégulation entre -55 et -30 °C ; et le réglage du seuil d'autorégulation d'un élément chauffant de la plaque de rayonnement de chaleur entre -55 et -30 °C ;
étape 2, l'introduction d'azote liquide dans un puits de chaleur de la cabine sous vide (10) pour réduire la température de la cabine sous vide à -150 °C ; la réduction de la température du réservoir de liquide à une première température d'essai à -50 °C, et la réalisation de l'équilibre de la condition de fonctionnement de la boucle de fluide diphasique ; dans lequel l'équilibre de la condition de fonctionnement signifie que la température du réservoir de liquide est maintenue pour être inchangée en une demi-heure ou le changement monotonique est inférieur à 1 °C/h ; et la température du réservoir de liquide est la température de fonctionnement de la boucle de fluide diphasique ;
étape 3, l'essai de la capacité de transfert de chaleur ultime :
le démarrage de la source de chaleur simulée, l'augmentation de la puissance de chauffe de la source de chaleur simulée selon la longueur d'étape réglée, et la réduction de la puissance de chauffe de l'élément chauffant à plaque de rayonnement de chaleur tout en augmentant la puissance de chauffe de la source de chaleur simulée à chaque fois pour maintenir la température du réservoir de liquide à -50 °C et réaliser l'équilibre de la condition de fonctionnement de la boucle de fluide diphasique jusqu'à ce que la puissance de chauffe de l'élément chauffant à plaque de rayonnement de chaleur soit nulle ou l'équilibre de la condition de fonctionnement ne puisse pas être maintenu car la température de l'évaporateur est montée soudainement ; et par conséquent, la détermination de la puissance de chauffe de la source de chaleur simulée à un moment d'équilibre lorsque la puissance de chauffe de l'élément chauffant à plaque de rayonnement de chaleur est nulle ou avant que la température de l'évaporateur soit montée soudainement en tant que capacité de transfert de chaleur ultime de la boucle de fluide diphasique à la température de fonctionnement ;
étape 4, le changement de la température du réservoir de liquide à chaque température d'essai en augmentant la puissance de la plaque de rayonnement de chaleur tout en réduisant la puissance de l'évaporateur, et la réalisation du procédé à l'étape 3 pour obtenir la capacité de transfert de chaleur ultime de la boucle de fluide diphasique à chaque température d'essai, dans lequel la température du réservoir de liquide est changée en utilisant un procédé de montée progressive ;
et l'étape 5, l'essai de la capacité de blocage de la boucle de fluide diphasique :
lorsque la boucle de fluide diphasique fonctionne dans une condition de fonctionnement équilibrée à des températures de fonctionnement différentes, le fait de garder la puissance de chauffe de la source de chaleur simulée et la puissance de chauffe de l'élément chauffant à plaque de rayonnement de chaleur inchangées, la réalisation d'une opération d'ouverture/fermeture sur la vanne de régulation, et la vérification de la performance de blocage de la boucle de fluide diphasique : le fait de montrer que la performance de blocage de la boucle de fluide diphasique est normale si la température de l'évaporateur est montée soudainement après être montée en continu et la température de la plaque de rayonnement de chaleur est réduite en continu après que la vanne de régulation est fermée, tandis que la température de l'évaporateur est réduite et la température de la plaque de rayonnement de chaleur est montée après que la vanne de régulation est rouverte jusqu'à ce que la condition de fonctionnement soit équilibrée ; et le fait de montrer que la performance de blocage de la boucle de fluide diphasique est anormale si la température de l'évaporateur est inchangée ou est montée de façon stable après que la vanne de régulation est fermée.

7. Procédé d'essai de performance thermique sous vide pour la boucle de fluide diphasique selon la revendication 6, **caractérisé en ce que** la source de chaleur simulée (15) est démarrée dans le processus de réduction de température à l'étape 2 de sorte que la boucle de fluide diphasique fonctionne pour accélérer la réduction de la température de l'évaporateur (1).
